# EUROPÄISCHE PATENTSCHRIFT

(11) **EP 1 054 796 B1**
(45) Veröffentlichungstag und Bekanntmachung des Hinweises auf die Patenterteilung: **27.11.2002**
(21) Anmeldenummer: 99908930.3
(22) Anmeldetag: 19.02.1999
(51) Int. Cl.: B60R 25/00

(54) **SICHERUNGSEINRICHTUNG ZUM GLOBALEN SCHUTZ VON GEGENSTÄNDEN MIT ELEKTRONISCHEN KOMPONENTEN**
SECURITY DEVICE FOR THE GLOBAL PROTECTION OF OBJECTS WITH ELECTRONIC COMPONENTS
DISPOSITIF DE SECURITE POUR LA PROTECTION GLOBALE D'OBJETS AVEC DES COMPOSANTS ELECTRONIQUES

(30) Priorität: 20.02.1998 DE 19807066
(43) Veröffentlichungstag der Anmeldung: 29.11.2000
(73) Patentinhaber: Messerschmid, Ernst, 72766 Reutlingen (DE)
(72) Erfinder: MESSERSCHMID, Ernst, D-72766 Reutlingen (DE); HUBER, Felix, D-70839 Gerlingen (DE); SCHÄFER, Wolfgang, D-71254 Ditzingen (DE)
(74) Vertreter: Gleiss & Grosse
(86) Internationale Anmeldenummer: EP9901082
(87) Internationale Veröffentlichungsnummer: WO99042344

(56) Entgegenhaltungen:
- EP-A- 0 712 768
- DE-A- 3 717 022
- DE-A- 4 318 596
- GB-A- 2 254 461
- GB-A- 2 271 008
- US-A- 5 490 200

## Beschreibung

Die Erfindung betrifft ein Verfahren zum globalen Schutz von Gegenständen mit elektronischen Komponenten, gemäß Oberbegriff des Anspruchs 1, und eine Vorrichtung zum globalen Schutz von Gegenständen mit elektronischen Komponenten, gemäß Oberbegriff des Anspruchs 16.

Es ist bekannt, daß sich elektrische Baugruppen durch Funksignale fernsteuern lassen. Eine typische Anwendung ist eine elektronische Alarmanlage und/oder Wegfahrsperre eines Kraftfahrzeuges, die der Benutzer mit einem Sender aktiviert oder deaktiviert. Dabei ist es unerheblich, ob der Sender direkt strahlt ( zum Beispiel über Infrarotübertragung) oder öffentliche Funkdienste oder Telefonnetze dazwischen geschaltet sind. Wird allerdings solch ein Diebstahlschutz so ausgerührt, daß das zu schützende Objekt durch Abklemmen oder Überbrücken der Schutzeinrichtung wieder aktiviert werden kann, so ist die Absicherung praktisch nutzlos.

Am Beispiel eines Kraftfahrzeuges sollen die typischen Merkmale und Probleme solch einer Sicherung erläutert werden. Prinzipiell läßt sich aber so eine Sicherung für alle Gegenstände mit einer elektronischen Komponente einsetzen. Hierzu können u.a. gehören: Funktelefone ("Handies"), (Euro-)Check- und Geldkarten, Kreditkarten, Telefonkarten, Schlüssel für elektronische Schließanlagen, bewegliche elektronische Geräte wie Kassettenrecorder, CD-Spieler, Uhren, Computer usw.

Es ist bekannt, daß Fahrzeuge mit mechanischen und/oder elektrischen Diebstahlschutzvorrichtungen durch Ausbau oder Überbrückung der Sicherung wieder betriebsbereit gemacht werden können. Dies lohnt sich insbesondere bei teuren Fahrzeugen, wo das gesamte Fahrzeug durch organisierte Banden einfach abtransportiert und an sicherer Stelle bearbeitet wird. Weiterhin ist bekannt, daß Fahrzeuge mit einer elektronischen Wegfahrsperre, die oft Teil der Motorsteuerung ist, nur unter großem Aufwand und mit Spezialkenntnissen wieder aktiviert werden können. Oftmals ist eine Reaktivierung nur mit einem Originalschlüssel und/oder durch Hinzuziehung einer Vertragswerkstatt möglich.

Da mit einem geraubten Originalschlüssel das Fahrzeug sofort betriebsbereit ist, wird derzeit eine Veränderung vom einfachen Fahrzeugdiebstahl hin zum Diebstahl mit Personenbedrohung beobachtet. Eine Deaktivierung durch einen kleinen Handsender auf einige hundert Meter Entfernung wäre zwar denkbar, birgt aber wieder die Gefahr, daß das Opfer sich selbst in Gefahr begibt, wenn der Täter von der Existenz dieses Senders weiß.

Um den Schutz der rechtmäßigen Eigentümer wieder sicherzustellen, wurden auch schon Konzepte angedacht, bei dem das Fahrzeug regelmäßig über Funk Signale zur Freischaltung der Elektronik erhält und beim Ausbleiben dieser Signale deaktiviert wird. Bei einem gestohlenen Fahrzeug können dann diese Signale gezielt abgeschaltet werden, so daß das Fahrzeug nicht mehr betriebsbereit ist. Dies hat allerdings den Nachteil, daß bei Auftreten eines Funkloches, wie es auch bei Mobiltelefonen immer wieder der Fall ist, eine Weiterfahrt nicht mehr möglich ist. Zudem muß eine lückenlose Überdeckung des Funkbereiches auch im Ausland gewährleistet sein, da eine temporäre Abschaltung der Sicherung für Auslandsaufenthalte den Schutz wieder ad absurdum führen würde. Eine solche Sicherung bedeutet deshalb starke Einschränkungen für den legalen Besitzer und ist daher am Markt nicht durchsetzbar.

Es sind außerdem Vorrichtungen bekannt, bei denen durch Funksignale ein Schalter im Fahrzeug aktiviert werden kann, der die Zündungselektronik deaktiviert. Solche Systeme werden durch eine Telefonverbindung realisiert, die der Benutzer durch Anwählen einer bestimmten Nummer, die dem Fahrzeugempfänger zugeordnet ist, aktiviert. Hierbei wäre auch eine globale Erreichbarkeit des Fahrzeuges denkbar. Diese Systeme können jedoch dadurch umgangen werden, daß der Empfänger aus dem Fahrzeug ausgebaut oder durch eine entsprechende Abschirmung am Empfang der Signale gehindert wird, so daß eine Blockierung der Zündelektronik nicht mehr erfolgt.

Für eine universelle Sicherung muß daher das System so gebaut sein, daß eine Reaktivierung nicht durch den Benutzer selbst erfolgen kann, denn sonst könnte man ja durch Erpressung die hierzu nötigen Informationen erhalten. Weiterhin muß die Deaktivierung des Systems auch nach dem Diebstahl zu einem beliebigen Zeitpunkt erfolgen können. Diese Deaktivierung kann auch durch Dritte erfolgen, so daß sich eine Bedrohung oder gar Tötung des Eigentümers nicht auszahlt. Für einen Dieb wird daher der Diebstahl eines solchen Objektes wertlos, da es innerhalb weniger Stunden seine gewünschte Funktionalität nicht mehr haben wird.

Aus der gattungsbildenden DE 43 18 596 A1 geht eine Anlage zur vorbeugenden Sicherung von Kraftfahrzeugen gegen Diebstahl hervor, die einen Rundfunk- oder Fernsehtuner zum Empfang und Auswerten von über einen Sender ausgestrahlten Funksignalen aufweist. Der im zu sichernden Kraftfahrzeug vorhandene Empfänger ist mit der Motorsteuerelektronik des Kraftfahrzeugs verbunden, die bei einem entsprechenden Funksignal eine irreversible Deaktivierung des Motorsteuerprogramms oder eine Zerstörung eines Mikroprozessors initiiert.

### Funktionsweise

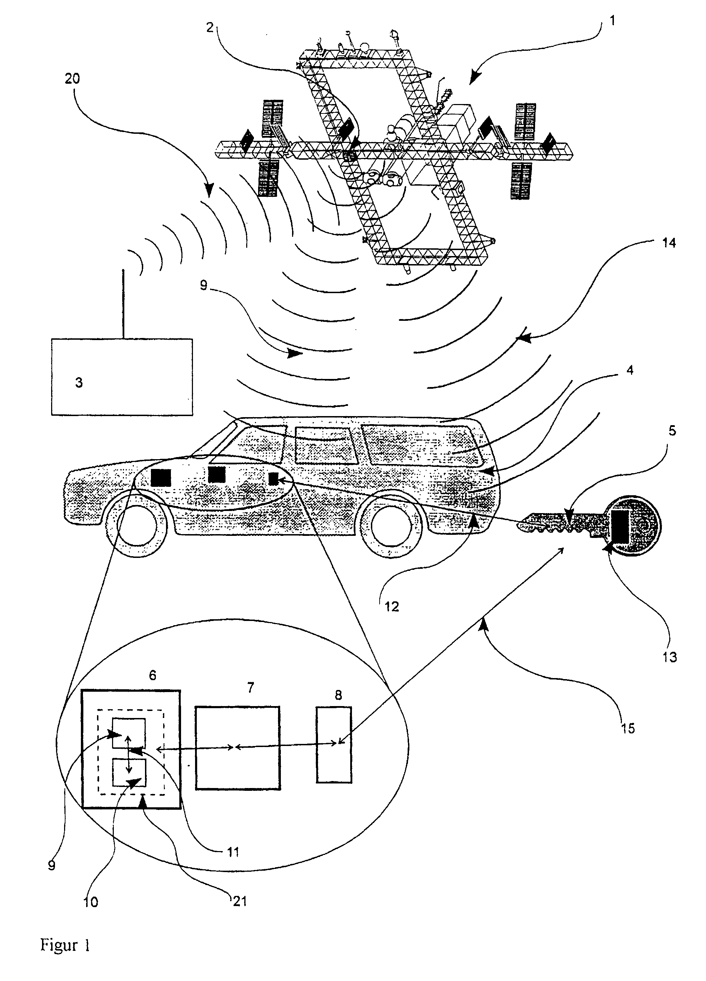

Die Erfindung vermeidet die oben genannten Nachteile, indem zumindest eine der Baugruppen 5, 6, 7, 8 (Figur 1) und/oder Informationen innerhalb zumindest einer dieser Baugruppen, die für den Betrieb des Fahrzeugs essentiell sind, irreversibel deaktiviert und/oder gelöscht werden, so daß auch ein Ausbau oder eine Überbrückung der betreffenden Komponenten keine Wirkung erzielt, so dass die Beschaffung eines funktionsfähigen Ersatzteils unumgänglich ist. Diese Baugruppen können zum Beispiel in der Motorelektronik 6, dem Lenkradschloß 7, dem Türschloß 8 und/oder dem Schlüssel 5 untergebracht sein.

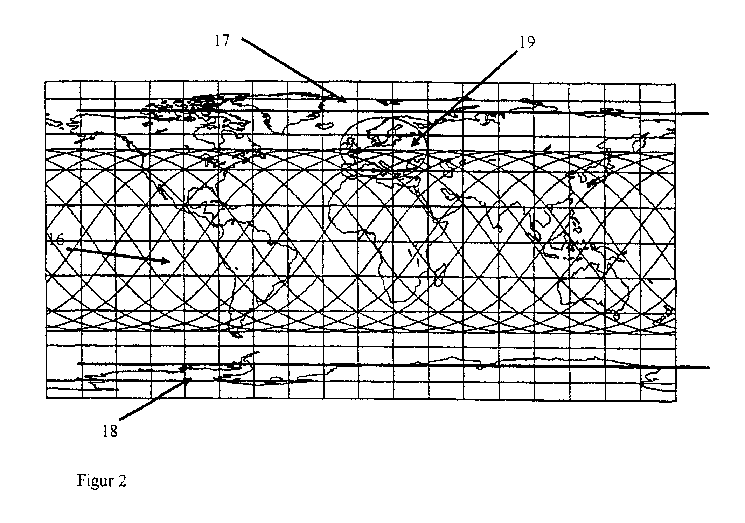

Zur Erzielung eines weltumspannenden Schutzes wird das Funksignal 9, 14 vorzugsweise von einem niedrig fliegenden Satelliten und/oder einer Raumstation 1, beide mit hoher Inklination -um eine globale Bedeckung zu erreichen- ausgestrahlt. Dabei ist es nicht nötig, in einer polaren Bahn mit 90° Inklination zu fliegen, da der Sender 2 eine gewisse Seitenreichweite 19 hat und schon bei etwa 50° Inklination durch die Drehung der Erde der Bereich der bewohnten Erdoberfläche 16 abgedeckt wird (Figur 2). In den nicht abgedeckten Bereichen 17, 18 an den Polen ist diese Anwendung uninteressant, da es hier keine Konsumenten gibt. Bei den heute üblichen Funkdichten und Beschränkungen der Sendeleistungen kommt zur Zeit hierfür vorzugsweise eine Raumstation 1 in Betracht, da sie über einen längeren Zeitraum in den für die Erzeugung der erforderlichen Empfangsfeldstärke maximalen Flughöhen bis 400 km gehalten werden kann. Die Ansteuerung des Senders 2 kann über Funk oder andere Kommunikationsmittel erfolgen, zum Beispiel durch Anruf bei einer Notzentrale 3, die die entsprechende Aktivierung 20 des Senders 2 übernimmt.

Bei einem Diebstahl des Fahrzeuges 4 mit Schlüssel 5 oder einer erpresserischen Übernahme des Schlüssels 5 ruft der legitime Fahrzeugeigentümer telefonisch eine Servicenummer an oder er übermittelt durch andere Art und Weise die Anzeige des Diebstahls. Nach einer Überprüfung seiner Authentizität, zum Beispiel durch Angabe eines Paßwortes um böswillige Deaktivierungen zu verhindern, wird durch eine oder mehrere Bodenstationen 3 die Identifikationsnummer der gestohlenen Einheit an den Sender 2 im Orbit übermittelt. Diese Identifikationsnummer (ID) ist vorzugsweise weltweit eindeutig für jeden Empfänger und/oder Empfängergruppe 5, 6, 7, 8 vergeben und kann zum Beispiel in einer Datenbank abgelegt sein. Der Sender 2 im Weltall sendet nun vorzugsweise periodisch diese ID aus, so daß im Verlauf der Zeit auf der gesamten Erdoberfläche 16 das Signal 9, 14 empfangen werden kann.

Die Diebstahlsicherung 6, 7, 8 im Fahrzeug löscht bei Erkennen des für sie bestimmten Signals 9 irreparabel wichtige Informationen und/oder zerstört Bauelemente vorzugsweise innerhalb der Bordelektronik, des Schlüssels und/oder des Schlosses, ohne die eine Funktion des Fahrzeugs 4 nicht möglich ist. Der Empfänger bzw. die Dekodierlogik 9 und die sicherheitsrelevanten Baugruppen 10 bilden vorzugweise eine Einheit 21 (z.B. Mikroprozessor mit eigenem, internen Speicher), damit nicht der Datenverkehr 11 der Elektronik "belauscht" und möglicherweise so manipuliert werden kann, daß keine Deaktivierung mehr erfolgen kann.

Zusätzlich zur Deaktivierung kann das Fahrzeug 4 auch Signale zurücksenden, die eine leichtere Lokalisierung ermöglichen, für den Schutz des Fahrzeuges ist dies jedoch nicht unbedingt erforderlich. Das System kann außerdem so gebaut sein, daß nur der legitime Besitzer dieses Signal auslosen kann, damit nicht eine unerwünschte permanente Ortung des Fahrzeuges möglich wird.

Die deaktivierten Baugruppen können durch Überprüfen der Seriennummer und/oder der zerstörten Daten auch nachtraglich noch als gestohlen identifiziert werden. Hierzu kann z.B. eine Vertragswerkstatt ein entsprechendes Diagnosegerät verwenden, mit dem die Daten der Baugruppen 5,6,7,8 ausgelesen werden. Um Fehlalarme und mutwillige Deaktivierungen auszuschließen, kann das Signal 9,14 mit Prüfsummen versehen werden, die einen Übertragungs- und/oder Authentizitatsfehler erkennen lassen.

Aus Sicherheitsgründen wird man vorzugsweise bei einem Fahrzeug, das gerade fährt, ein geregeltes, langsames Abschalten vornehmen, so daß die Gefahr eines Unfalles vermieden wird. Dies kann z.B. so geschehen, daß das Fahrzeug nicht mehr beschleunigt werden kann und allmählich immer langsamer wird bis ein Stillstand erreicht wird. Anschließend kann der Motor abschaltet werden. Dabei ist es irrelevant, ob die Deaktivierung sofort erfolgt oder erst einige Zeit, nachdem das Diebstahisignal abgesetzt wurde. Für den potentiellen Dieb wird die Entwendung eines solchen Fahrzeugs uninteressant, da das Fahrzeug nach der Entwendung jederzeit stehen bleiben kann und unbenutzbar wird.

Es ist auch möglich, diesen Empfanger nicht nur im Fahrzeug 4 selbst, sondern auch im Schlüssel 5 unterzubringen (Verteilte Sicherheit). Moderne Wegfahrsperren verwenden vorzugsweise keine mechanischen Schlosser mehr, sondern tauschen zwischen Schlüssel und Fahrzeug verschlüsselte Codes 12 aus, die das Fahrzeug entsperren. Im Falle einer Deaktivierung durch ein Funksignal 9,14 reicht es daher aus, wenn zumindest eine der Komponenten 5,6,7,8 den Abschaltcode erhalten hat. Beim nächsten Versuch, das Fahrzeug 4 zu starten, breitet sich die Information durch den Datenaustausch 15 vorzugsweise auf alle Komponenten aus, die sich nun ihrerseits wie oben beschrieben deaktivieren. Dieser Datenaustausch kann ebenfalls nicht unterbunden werden, z.B. durch das Einspielen von synthetischen Informationen, da die Signalisierung durch das Ausbleiben der richtigen Daten 12 erfolgt. Diese Daten 12 werden bei jeder Kontaktaufnahme der Komponenten 5,6,7,8 neu generiert und können nur von diesen erzeugt und entschlüsselt werden, da die Komponenten bei der Herstellung aufeinander abgeglichen werden (Prinzip der Einmal-Codes).

Eine "Reparatur" des Fahrzeuges ist also anschließend nur durch Tausch vorzugsweise aller deaktivierten Komponenten 5,6,7,8 gleichzeitig möglich. Eine Vertragswerkstatt kann beim Verkauf der neuen Baugruppen, die natürlich nur unter Rückgabe mindestens einer der deaktivierten Komponenten 5,6,7,8 erfolgt, feststellen, ob ein Diebstahlsignal 9,14 für die Deaktivierung verantwortlich war und so den Dieb beim Versuch, das Fahrzeug 4 umzubauen und wieder zu reaktivieren, dingfest machen. Der Vorwand, die Komponenten seien bei einem Unfall zerstört worden und könnten daher nicht vorgelegt werden, hilft hier auch nicht weiter, da ein Unfall, bei dem samtliche Elektronikmodule 6,7,8 sowie alle Schlüssel 5 zerstört wurden, nicht vorkommen kann. Auch die Abgabe eines unversehrten Schlüssels 5, der kein Deaktivierungssignal 14 empfangen hatte, ist nutzlos, da in diesem Fall das Auslesen der ID und ein Abgleich mit der Datenbank sofort einen Diebstahl aufzeigt.

Die verteilte Sicherheit erhöht außerdem die Zuverlässigkeit des Systems, da Fahrzeuge unter Umständen in Bereichen abgestellt werden, wo ein Empfang der Funksignale 9,14 nicht städig möglich ist (Tiefgarage o.a.) oder der Empfanger absichtlich abgeschirmt wird. Es darf für den legalen Benutzer aber nicht der Fall eintreten, daß das Gerät durch schlechte Empfangsbedingungen fälschlicherweise deaktiviert wird. Ein im Schlüsselanhänger integrierter Empfänger 13 wird normalerweise hinreichend oft gute Empfangsbedingungen haben und kann regelmäßig kontrollieren, ob der Diebstahlfunkdienst 14 fehlerfrei empfangen werden kann. Ist dies nicht der Fall, so geht der jeweilige Empfänger in einen metastabilen Zustand über. Beim nächsten Versuch, das Fahrzeug zu starten, prüfen die Komponenten durch den Abgleich 15 ihrer Daten untereinander, ob mindestens eine der Komponenten innerhalb der zulässigen Zeitspanne ein Signal 9,14 empfangen konnte. Wenn ja, so wird die Anlage vollständig reaktiviert. Wenn nein, so wird dem Benutzer signalisiert, daß innerhalb einer bestimmten Zeitspanne ein Funkkontakt ermöglicht werden muß, da sich ansonsten die Elektronik deaktivieren wird. Läßt der Dieb bei einem gestohlenen Fahrzeug diesen Funkkontakt zu, so wird die Elektronik ebenfalls deaktiviert, so daß in keinem Fall das Fahrzeug 4 für einen Dieb benutzbar bleibt.

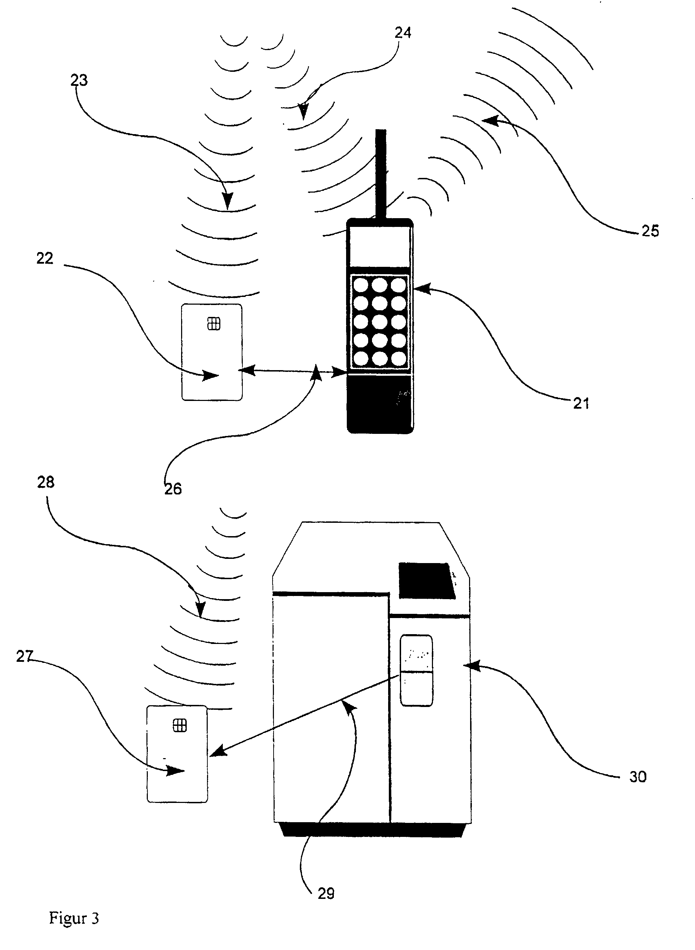

Da der Empfänger sehr stark miniaturisiert werden kann, eignet sich dieses System der Deaktivierung auch sehr gut für Geräte, die sowieso Funkkontakte herstellen müssen, wie z.B. Funktelefone 21 (Figur 3). Der Empfänger kann dabei in der Chipkarte 22 und/oder dem Telefon 21 untergebracht sein. Wenn eines der Geräte ein Deaktivierungssignal 23,24 empfängt, wird bei der nächsten Inbetriebnahme, bei der die Karte 22 in das Telefon 21 gesteckt werden muß, durch den Datenaustausch 26 der Komponenten untereinander das Telefon 21 und/oder der Chipkarte 22 deaktiviert, wobei das Telefon auch nach einer Deaktivierung weiterhin solche Signale 25 aussenden kann, daß eine Lokalisierung möglich wird.

Prinzipiell läßt sich der Empfänger auch in die neueste Generation von Checkkarten 27 einbauen, so daß hier ein Schutz von EC-, Kredit- und Telefonkarten möglich wird. Eine Karte, die ein Deaktivierungssignal 28, 29 empfängt (dies kann auch aus dem Automaten 30 selbst stammen), kann ebenfalls ihren internen Speicher löschen. Beim nächsten Versuch, die Karte zu benutzen, kann ein Geldautomat 30 dies feststellen und entsprechende weitergehende-Maßnahmen einleiten: z.B. Aufzeichnung der Person auf Video, Meldung des Standortes zur Bewegungsbilderstellung, Sperrung der Türen usw.

## Patentansprüche

1. Verfahren zum globalen Schutz von Gegenständen mit elektronischen Komponenten, bei dem durch ein Funksignal Bauelemente und/oder Informationen so verändert werden, dass ein normaler Betrieb der Gegenstände nicht mehr möglich ist, wobei für einen Gegenstand mehrere miteinander verbundene Baugruppen (5,6,7,8) vorhanden sind, wobei mindestens eine Baugruppe (5,6,7,8) das Funksignal empfangen und auswerten kann und wobei mindestens eine Baugruppe (5,6,7,8) nach Erhalt des Funksignals die irreversible Deaktivierung einleitet, **dadurch gekennzeichnet, dass** die Baugruppen (5,6,7,8) unabhängig voneinander das Funksignal empfangen und auswerten können, und dass die Baugruppen (5,6,7,8) einen Erhalt des Funksignals untereinander bestätigen und die irreversible Deaktivierung einleiten.

2. Verfahren nach Anspruch 1, **dadurch gekennzeichnet, dass** ein Funksignal regelmäßig zur Kontrolle der Baugruppen (5,6,7,8) gesendet wird und beim Ausbleiben des Funksignals einem Benutzer signalisiert wird, zumindest eines der Bauteile (5,6,7,8) innerhalb einer bestimmten Zeitspanne in Funkkontakt zu bringen.

3. Verfahren nach Anspruch 1 oder 2, **dadurch gekennzeichnet, dass** die Funksignale insbesondere von einem oder mehreren Flugkörpern wie Satelliten oder Luftschiffen abgestrahlt werden.

4. Verfahren nach einem der oberen Ansprüche, **dadurch gekennzeichnet, dass** die Aufarbeitung der zu sendenden Signale durch eine Notzentrale oder eine andere zentrale Stelle erfolgt.

5. Verfahren nach einem der oberen Ansprüche, **dadurch gekennzeichnet, dass** sowohl die Aussendung der Signale als auch die Deaktivierung sofort oder zeitverzögert geschehen.

6. Verfahren nach einem der oberen Ansprüche, **dadurch gekennzeichnet, dass** die Empfänger der Funksignale zusätzlich weltweit eindeutige Kennnummern besitzen.

7. Verfahren nach Anspruch 6, **dadurch gekennzeichnet, dass** diese Kennnummern einmalig oder periodisch ausgesendet werden.

8. Verfahren nach Anspruch 6 oder 7, **dadurch gekennzeichnet, dass** die Kennnummern in einer Datenbank abgelegt sind.

9. Verfahren nach einem der oberen Ansprüche, **dadurch gekennzeichnet, dass** die Empfänger nach dem Erhalt von einer oder mehreren Kennnummern auch Signale vorzugsweise zum Sender zurückschicken können.

10. Verfahren nach Anspruch 9, **dadurch gekennzeichnet, dass** die zurückgesendeten Signale außerdem zur Ortung verwendet werden.

11. Verfahren nach einem der oberen Ansprüche, **dadurch gekennzeichnet, dass** die Signale Prüfsummen enthalten, die Übertragungsfehler und/oder Fälschungen erkennen lassen.

12. Verfahren nach einem der oberen Ansprüche, **dadurch gekennzeichnet, dass** die authentische Übermittlung der Signale durch Einmal-Codes gesichert ist.

13. Verfahren nach einem der oberen Ansprüche, **dadurch gekennzeichnet, dass** die erfolgte Deaktivierung und/oder die Identität der Baugruppe auch nachträglich noch überprüft werden kann.

14. Verfahren nach einem der oberen Ansprüche, **dadurch gekennzeichnet, dass** die Deaktivierung auch nachträglich erfolgen kann.

15. Verfahren nach einem der oberen Ansprüche, **dadurch gekennzeichnet, dass** eine Reaktivierung nur durch den Tausch von vorzugsweise allen Komponenten erfolgen kann.

16. Vorrichtung zum globalen Schutz von Gegenständen mit elektronischen Komponenten, bei der durch ein Funksignal Bauelemente und/oder Informationen so verändert werden, dass ein normaler Betrieb der Gegenstände nicht mehr möglich ist, wobei der Gegenstand mehrere miteinander verbundene Baugruppen aufweist, wobei mindestens eine Baugruppe (5,6,7,8) das Funksignal empfangen und auswerten kann und wobei mindestens eine Baugruppe (5,6,7,8) nach Erhalt des Funksignals die irreversible Deaktivierung einleitet, **dadurch gekennzeichnet, dass** die Baugruppen (5,6,7,8) unabhängig voneinander das Funksignal empfangen und auswerten können, und dass die Baugruppen (5,6,7,8) einen Erhalt des Funksignals untereinander bestätigen können und die irreversible Deaktivierung einleiten.

17. Vorrichtung nach Anspruch 16, **dadurch gekennzeichnet, dass** die relevanten Bauteile eine Einheit bilden und/oder durch abhörsichere Leitungen verbunden sind.

18. Vorrichtung nach einem der Ansprüche 16 oder 17, **dadurch gekennzeichnet, dass** die Bauteile (5,6,7,8) eine Decodierlogik (9) beinhalten.

19. Verwendung der Vorrichtung beziehungsweise des Verfahrens nach einem der vorhergehenden Ansprüche, **dadurch gekennzeichnet, dass** die Bauteile (5,6,7,8) in ein Fahrzeug (4) integriert sind.

20. Verwendung nach Anspruch 19, **dadurch gekennzeichnet, dass** eines der Bauteile (5,6,7,8) in einem Fahrzeugschlüssel untergebracht ist.

21. Verwendung der Vorrichtung beziehungsweise des Verfahrens nach einem der Ansprüche 1 bis 18, **dadurch gekennzeichnet, dass** die Bauteile (5,6,7,8) in ein Funktelefon (21) integriert sind.

22. Verwendung nach Anspruch 21, **dadurch gekennzeichnet, dass** eines der Bauteile (5,6,7,8) in einer Chipkarte untergebracht ist.

## Claims

1. A method for global protection of objects with electronic components, in which components and/or information are so altered by a radio signal that normal operation of the objects is no longer possible, wherein a plurality of interconnected modules (5, 6, 7, 8) are provided for an object, wherein at least one module can receive and evaluate the radio signal and wherein at least one module (5, 6, 7, 8) initiates the irreversible deactivation following receipt of the radio signal, **characterized in that** the modules (5, 6, 7, 8) can receive and evaluate the radio signal independently of one another and **in that** the modules (5, 6, 7, 8) confirm reception of the radio signal among one another and initiate the irreversible deactivation.

2. A method according to claim 1, **characterized in that** a radio signal is transmitted regularly to monitor the modules (5, 6, 7, 8) and on failure of the radio signal to appear a user is signalled to bring at least one of the components (5, 6, 7, 8) into radio contact within a predetermined interval of time.

3. A method according to claim 1 or 2, **characterized in that** the radio signals are radiated in particular from one or more flying bodies, such as satellites or airships.

4. A method according to any of the above claims, **characterized in that** the processing of the signals to be sent is effected by an emergency centre or another central place.

5. A method according to any of the above claims, **characterized in that** both the transmission of the signals and also the deactivation occur immediately or with a time delay.

6. A method according to any of the above claims, **characterized in that** the receivers of the radio signals additionally have identifying numbers unique worldwide.

7. A method according to claim 6, **characterized in that** these identifying numbers are transmitted once or periodically.

8. A method according to claim 6 or 7, **characterized in that** the identifying numbers are held in a databank.

9. A method according to any of the above claims, **characterized in that** the receivers can also send back signals, preferably to the transmitter, after reception of one or more identifying numbers.

10. A method according to claim 9, **characterized in that** the signals which are sent back are also used for position finding.

11. A method according to any of the above claims, **characterized in that** the signals include check sums which allow transmission errors and/or counterfeits to be recognised.

12. A method according to any of the above claims, **characterized in that** authentic transmission of the signals is secured by one time codes.

13. A method according to any of the above claims, **characterized in that** the effected deactivation and/or the identity of the module can also be checked subsequently.

14. A method according to any of the above claims, **characterized in that** the deactivation can also be effected subsequently.

15. A method according to any of the above claims, **characterized in that** reactivation can only be effected by exchange of preferably all components.

16. Apparatus for global protection of objects with electronic components, in which components and/or information are so altered by a radio signal that normal operation of the objects is no longer possible, wherein the objects comprise a plurality of interconnected modules, wherein at least one module (5, 6, 7, 8) can receive and evaluate the radio signal and wherein at least one module (5, 6, 7, 8) initiates the irreversible deactivation after receipt of the radio signal, **characterized in that** the modules (5, 6, 7, 8) can receive and evaluate the radio signal independently of one another and **in that** the modules (5, 6, 7, 8) can confirm among themselves reception of the radio signal and initiate the irreversible deactivation.

17. Apparatus according to claim 16, **characterized in that** the relevant components form a unit and/or are connected by lines secure against eavesdropping.

18. Apparatus according to either claim 16 or 17, **characterized in that** the components (5, 6, 7, 8) include decoder logic (9).

19. Use of the apparatus or method according to any of the preceding claims, **characterized in that** the components (5, 6, 7, 8) are integrated in a vehicle (4).

20. Use according to claim 19, **characterized in that** one of the components (5, 6, 7, 8) is incorporated in a vehicle key

21. Use of the apparatus or method according to any of the claims 1 to 18, **characterized in that** the components (5, 6, 7, 8) are integrated in a radio phone (21).

22. Use according to claim 21, **characterized in that** one of components (5, 6, 7, 8) is fitted in a chip card.

## Revendications

1. Procédé de protection globale d'objets avec des composants électroniques selon lequel un signal radio modifie des composants et/ou des informations pour ne plus permettre un fonctionnement normal des objets ; plusieurs ensembles (5, 6, 7, 8) reliés entre eux étant prévus pour un objet ; au moins un ensemble (5, 6, 7, 8) peut recevoir et exploiter le signal radio ; et après réception du signal radio au moins un ensemble (5, 6, 7, 8) commence la désactivation irréversible, **caractérisé en ce que** les ensembles (5, 6, 7, 8) peuvent recevoir et exploiter le signal radio indépendamment les uns des autres ; et les ensembles (5, 6, 7, 8) confirment entre eux la réception du signal radio et commencent la désactivation irréversible.

2. Procédé selon la revendication 1, **caractérisé en ce qu'** un signal radio est émis régulièrement pour contrôler les ensembles (5, 6, 7, 8) et lorsque le signal radio fait défaut, on demande à un utilisateur de mettre au moins l'un des composants (5, 6, 7, 8) en contact radio à l'intérieur d'un intervalle de temps déterminé.

3. Procédé selon les revendications 1 ou 2, **caractérisé en ce que** les signaux radio sont émis notamment par un ou plusieurs engins aériens tels que des satellites ou des aéronefs.

4. Procédé selon l'une des revendications ci-dessus, **caractérisé en ce que** les signaux à émettre sont préparés par une centrale de secours ou un autre poste central.

5. Procédé selon l'une des revendications ci-dessus, **caractérisé en ce que** à la fois l'émission des signaux et la désactivation se font immédiatement ou de manière temporisée.

6. Procédé selon l'une des revendications ci-dessus, **caractérisé en ce que** les récepteurs des signaux radio possèdent des numéros caractéristiques, uniques dans le monde entier.

7. Procédé selon la revendication 6, **caractérisé en ce que** ces numéros caractéristiques sont émis une seule fois ou de manière périodique.

8. Procédé selon la revendication 6 ou 7,
**caractérisé en ce que** les numéros caractéristiques sont enregistrés dans une banque de données.

9. Procédé selon l'une des revendications ci-dessus, **caractérisé en ce qu'** après réception d'un ou plusieurs numéros caractéristiques les récepteurs peuvent renvoyer également des signaux, de préférence vers l'émetteur.

10. Procédé selon la revendication 9, **caractérisé en ce que** les signaux renvoyés sont en outre utilisés pour la localisation.

11. Procédé selon l'une des revendications ci-dessus, **caractérisé en ce que** les signaux contiennent des sommes de contrôle permettant de déceler les erreurs de transmission et/ou les falsifications.

12. Procédé selon l'une des revendications ci-dessus, **caractérisé en ce que** la transmission authentique des signaux est protégée par un code à usage unique.

13. Procédé selon l'une des revendications ci-dessus, **caractérisé en ce que** la désactivation effectuée et/ou l'identité des ensembles peuvent également être contrôlés a posteriori.

14. Procédé selon l'une des revendications ci-dessus, **caractérisé en ce que** la désactivation peut également se faire a posteriori.

15. Procédé selon l'une des revendications ci-dessus, **caractérisé en ce que** une réactivation ne peut se faire que par le remplacement de préférence tous les composants.

16. Dispositif de protection globale d'objets avec des composants électroniques selon lequel un signal radio modifie des composants et/ou des informations pour ne plus permettre un fonctionnement normal des objets, l'objet ayant plusieurs ensembles reliés entre eux, alors qu'au moins un ensemble (5, 6, 7, 8) recevant et exploitant le signal radio, alors qu'au moins un ensemble (5, 6, 7, 8) après réception du signal radio, commence la désactivation irréversible, **caractérisé en ce que** les ensembles (5, 6, 7, 8) reçoivent et traitent le signal radio indépendamment les uns des autres ; et les ensembles (5, 6, 7, 8) peuvent confirmer entre eux la réception du signal radio et commencer la désactivation irréversible.

17. Dispositif selon la revendication 16, **caractérisé en ce que** les composants concernés constituent une unité et/ou sont reliés par des lignes protégées contre les écoutes pirates.

18. Dispositif selon l'une des revendications 16 ou 17, **caractérisé en ce que** les composants (5, 6, 7, 8) comportent une logique de décodage (9).

19. Utilisation du dispositif ou du procédé selon l'une des revendications précédentes, **caractérisée en ce que** les composants (5, 6, 7, 8) sont intégrés à un véhicule (4).

20. Utilisation selon la revendication 19,
**caractérisée en ce que** l'un des composants (5, 6, 7, 8) est intégré dans une clé de véhicule.

21. Utilisation du dispositif ou du procédé selon l'une des revendications 1 à 18, **caractérisée en ce que** les composants (5, 6, 7, 8) sont intégrés dans un téléphone mobile (21).

22. Utilisation selon la revendication 21, **caractérisée en ce que** l'un des composants (5, 6, 7, 8) est intégré dans une carte à puce.
